# EUROPEAN PATENT APPLICATION

(11) **EP 4 311 442 A1**
(43) Date of publication of application: **31.01.2024**
(21) Application number: 21946762.8
(22) Date of filing: 26.10.2021
(51) Int. Cl.: A24F 40/40, A24F 40/485

(54) **POWER SUPPLY COMPONENT OF AEROSOL GENERATION DEVICE AND ELECTRONIC CIGARETTE**

(30) Priority: 25.06.2021 CN 202121436201 U
(71) Applicant: BYD Precision Manufacture Co., Ltd., Shenzhen Guangdong 518116 (CN)
(72) Inventor: ZHAO, Lixiao, ShenZhen Guangdong 518116 (CN); TANG, Jiajian, ShenZhen Guangdong 518116 (CN); FENG, Xianjun, ShenZhen Guangdong 518116 (CN); WANG, Jinxing, ShenZhen Guangdong 518116 (CN)
(74) Representative: Winter, Brandl - Partnerschaft mbB
(86) International application number: PCT/CN2021/126475
(87) International publication number: WO 2022/267280

(57) **Abstract**

The present disclosure relates to a power supply assembly of an aerosol-generation apparatus and an e-cigarette. The power supply assembly includes: a housing, an air inlet being provided on the housing; a support, the support being arranged in the housing, the support including a first mounting portion and a second mounting portion, and a circuit structure being arranged on the support; a main board assembly and a power supply, the main board assembly and the power supply being arranged on the second mounting portion; an electrode terminal, the electrode terminal being arranged on the first mounting portion, and the electrode terminal being electrically connected to the circuit structure and a vaporizer respectively; a first sealing member, arranged on the support and abutting against an inner wall surface of the housing; and a second sealing member, arranged on an end of the first mounting portion away from the first sealing member and abutting against the inner wall surface of the housing, and the first sealing member and the second sealing member defining an air-inlet region in the housing.

## Description

This application claims priority to Chinese Patent Application No. 202121436201.8, filed on June 25, 2021, and entitled "POWER SUPPLY ASSEMBLY OF AEROSOL-GENERATION APPARATUS AND E-CIGARETTE", which is incorporated herein by reference in its entirety.

### FIELD

The present disclosure relates to the field of e-cigarette technologies, and more specifically, a power supply assembly of an aerosol-generation apparatus and an e-cigarette including the power supply assembly.

### BACKGROUND

Compared with real cigarettes, e-cigarettes have the advantages of low harm, simple structure, easy to use, small size, easy to carry, exquisite appearance, and the like. However, safety issues of the e-cigarettes during use cannot be ignored. How to avoid the harm caused by improper use of batteries to a user is an important link in a design for safe use of an aerosol-generation apparatus.

In a power supply assembly of an existing aerosol-generation apparatus, a sealing member covers an electrode pole, a through hole is provided on the sealing member, and the electrode pole is interference fit with the through hole on the sealing member. During assembly or use of the aerosol-generation apparatus, a local gap is formed between the electrode pole and the sealing member. When the battery abnormally operates, hazardous gas generated by the battery enters an air-inlet space through the gap and is inhaled by a user, reducing product safety.

### SUMMARY

An objective of the present disclosure is to provide a new technical solution of a power supply assembly of an aerosol-generation apparatus, which can resolve at least a problem of a power supply assembly in the related art that when a battery abnormally operates, hazardous gas generated by the battery enters an air-inlet space through a local gap between an electrode pole and a sealing member, and the hazardous gas is inhaled by a user.

Another objective of the present disclosure is to provide a new technical solution of an e-cigarette. The e-cigarette includes the power supply assembly of an aerosol-generation apparatus and a vaporizer.

According to a first aspect of the present disclosure, a power supply assembly of an aerosol-generation apparatus is provided, configured to supply power to a vaporizer of an aerosol-generation apparatus. The power supply assembly includes: a housing, an air inlet being provided on the housing; a support, the support being arranged in the housing, the support including a first mounting portion and a second mounting portion, and a circuit structure extending from the first mounting portion to the second mounting portion being arranged on the support; a main board assembly and a power supply, the main board assembly and the power supply being arranged on the second mounting portion, and the main board assembly being electrically connected to the circuit structure and the power supply respectively; an electrode terminal, the electrode terminal being arranged on the first mounting portion, and the electrode terminal being electrically connected to the circuit structure and the vaporizer of the aerosol-generation apparatus respectively; a first sealing member, the first sealing member being arranged on the support and being located between the first mounting portion and the second mounting portion, and the first sealing member abutting against an inner wall surface of the housing to separate the first mounting portion and the second mounting portion in the housing; and a second sealing member, the second sealing member being arranged on an end of the first mounting portion away from the first sealing member, the second sealing member abutting against the inner wall surface of the housing, the first sealing member and the second sealing member defining an air-inlet region in the housing, and the air inlet being in communication with the air-inlet region.

Further, a first sealing groove extending along a circumferential direction of the support is provided between the first mounting portion and the second mounting portion, and the first sealing member is arranged in the first sealing groove.

Further, the first sealing member is an annular sealing ring, and the first sealing member is sleeved on the support or the first sealing member and the support are integrally formed.

Further, a mounting hole is provided on the end of the first mounting portion away from the first sealing member, the electrode terminal is inserted and fixed to the mounting hole, an end of the electrode terminal is electrically connected to the circuit structure, and an other end of the electrode terminal is electrically connected to the vaporizer of the aerosol-generation apparatus.

Further, a second sealing groove extending along the circumferential direction of the support is provided on a periphery of the end of the first mounting portion away from the first sealing member, and the second sealing member is arranged in the second sealing groove.

Further, the second sealing member is of a cover structure, and the second sealing member covers the end of the first mounting portion away from the first sealing member.

Further, an avoidance hole is provided on the second sealing member, and the electrode terminal passes through the avoidance hole and is electrically connected to the vaporizer of the aerosol-generation apparatus.

Further, the circuit structure is a printing circuit covering an outer surface of the support.

Further, the power supply assembly of an aerosol-generation apparatus further includes an airflow sensor. The airflow sensor is arranged on the first mounting portion. The airflow sensor is electrically connected to the circuit structure. A position of the airflow sensor corresponds to a position of an air inlet.

Further, the aerosol-generation apparatus further includes an electrical connection member. The electrical connection member is arranged between the airflow sensor and the circuit structure. A first end of the electrical connection member is electrically connected to an electrode of the airflow sensor. A second end of the electrical connection member abuts against the circuit structure.

Further, limiting convex strips extending along a length direction of one of the support and the housing are arranged on two sides of one of the support and the housing, limiting grooves corresponding to positions of the limiting convex strips are provided on two sides of the other of the support and the housing, and the limiting convex strips are inserted into the limiting grooves.

According to a second aspect of the present disclosure, an e-cigarette is provided, which includes the power supply assembly of an aerosol-generation apparatus according to any embodiment and the vaporizer. The vaporizer is connected to the power supply assembly.

According to an embodiment of the present disclosure, a first mounting portion, a second mounting portion, and a circuit structure extending from the first mounting portion to the second mounting portion are arranged on a support, an air flow between the first mounting portion and the second mounting portion is separated through a first sealing member, and an electrode terminal on the first mounting portion may be electrically connected to a power supply of the second mounting portion through the circuit structure without being connected to a battery end space in which the second mounting portion is located, to ensure that the battery end space is completely separated from an air-inlet region, thereby effectively preventing hazardous gas generated by a battery from entering the air-inlet region and improving product safety.

Other features and advantages of the present disclosure will become apparent from the following detailed description of exemplary embodiments of the present disclosure with reference to the drawings.

### BRIEF DESCRIPTION OF THE DRAWINGS

Accompanying drawings are incorporated into and constitute a part of this specification, show embodiments that conform to this application, and are used together with this specification to describe the principle of the present disclosure.
FIG. 1 is a structural exploded view of an aerosol-generation apparatus according to an embodiment of the present disclosure;
FIG. 2 is a partial enlarged view of a region A in FIG. 1;
FIG. 3 is a cross-sectional view of an aerosol-generation apparatus according to an embodiment of the present disclosure;
FIG. 4 is a partial enlarged view of a region B in FIG. 3;
FIG. 5 is another cross-sectional view of an aerosol-generation apparatus according to an embodiment of the present disclosure;
FIG. 6 is a schematic structural diagram of a support of an aerosol-generation apparatus according to an embodiment of the present disclosure;
FIG. 7 is another schematic structural diagram of a support of an aerosol-generation apparatus according to an embodiment of the present disclosure; and
FIG. 8 is still another schematic structural diagram of a support of an aerosol-generation apparatus according to an embodiment of the present disclosure.

### Reference signs:

Power supply assembly 100;
Housing 10; Air inlet 11; Air-inlet region 12; Battery end space 13;
Support 20; First sealing groove 21; Second sealing groove 22; Mounting hole 23; Limiting convex strip 24; First mounting portion 25; Second mounting portion 26;
Main board assembly 31; Power supply 32;
Circuit structure 40; Current path 41; Start point 42; First end point 43; Second end point 44;
Electrode terminal 51; Fixing block 52;
First sealing member 61; Second sealing member 62; Avoidance hole 621;
Airflow sensor 70;
Electrical connection member 80;
Lower cover 91; Fixing tape 92; and Cover housing 93.

### DETAILED DESCRIPTION

Various exemplary embodiments of the present disclosure are now described in detail with reference to the accompanying drawings. It should be noted that, unless otherwise specified, opposite arrangement, numerical expressions, and numerical values of components and steps described in the embodiments do not limit the scope of the present disclosure.

The following descriptions of at least one exemplary embodiment are merely illustrative, and in no way constitute any limitation on the present disclosure and application or use of the present disclosure.

Technologies, methods, and devices known to those of ordinary skill in related arts may not be discussed in detail, but where appropriate, the techniques, the methods, and the devices should be considered as a part of the specification.

In all examples shown and discussed herein, any specific value should be construed as merely exemplary and not as limitations. Therefore, other examples of exemplary embodiments may have different values.

It should be noted that: similar reference signs or letters in the accompanying drawings indicate similar items. Therefore, once an item is defined in one accompanying drawing, the item does not need to be further discussed in the subsequent accompanying drawings.

The following specifically describes a power supply assembly 100 of an aerosol-generation apparatus according to an embodiment of the present disclosure with reference to the accompanying drawings.

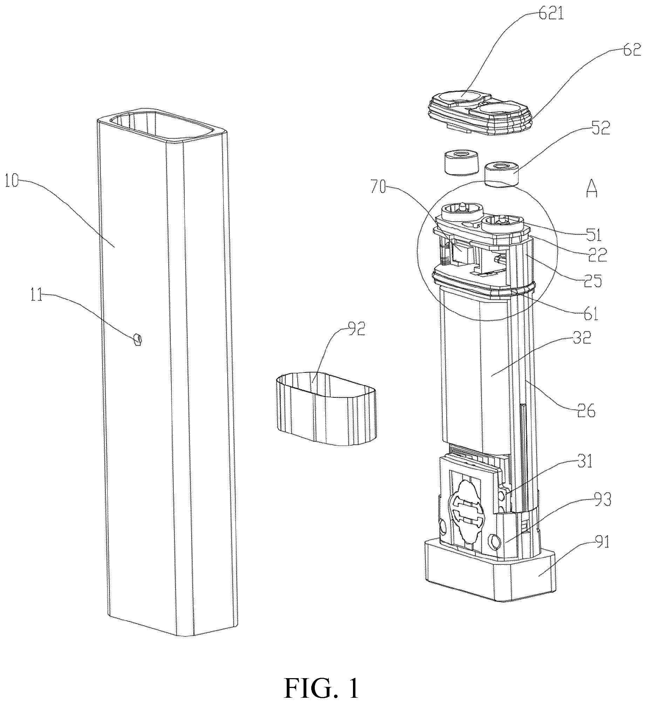

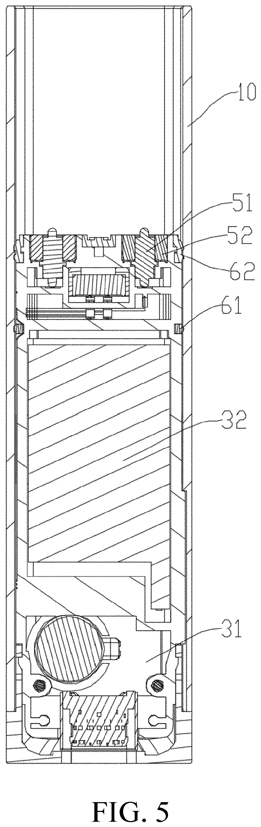

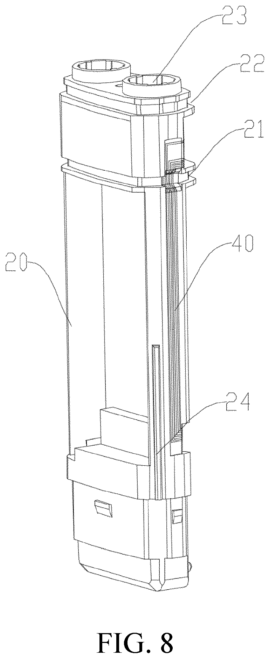

As shown in FIG. 1 to FIG. 8, the power supply assembly 100 of an aerosol-generation apparatus according to the embodiments of the present disclosure is configured to supply power to a vaporizer of an aerosol-generation apparatus. The power supply assembly 100 of an aerosol-generation apparatus includes a housing 10, a support 20, a main board assembly 31, a power supply 32, an electrode terminal 51, a first sealing member 61, and a second sealing member 62.

Specifically, an air inlet 11 is provided on the housing 10. The support 20 is arranged in the housing 10. The support 20 includes a first mounting portion 25 and a second mounting portion 26. A circuit structure 40 extending from the first mounting portion 25 to the second mounting portion 26 is arranged on the support 20. The main board assembly 31 and the power supply 32 are arranged on the second mounting portion 26. The main board assembly 31 is electrically connected to the circuit structure 40 and the power supply 32 respectively. The electrode terminal 51 is arranged on the first mounting portion 25, and the electrode terminal 51 is electrically connected to the circuit structure 40 and the vaporizer of the aerosol-generation apparatus respectively. The first sealing member 61 is arranged on the support 20 and is located between the first mounting portion 25 and the second mounting portion 26. The first sealing member 61 abuts against an inner wall surface of the housing 10 to separate the first mounting portion 25 and the second mounting portion 26 in the housing 10. The second sealing member 62 is arranged on an end of the first mounting portion 25 away from the first sealing member 61. The second sealing member 62 abuts against the inner wall surface of the housing 10. The first sealing member 61 and the second sealing member 62 define an air-inlet region 12 in the housing 10. The air inlet 11 is in communication with the air-inlet region 12.

In other words, referring to FIG. 1, the power supply assembly 100 of an aerosol-generation apparatus according to the embodiment of the present disclosure mainly includes the housing 10, the support 20, the main board assembly 31, the power supply 32, the electrode terminal 51, the first sealing member 61, and the second sealing member 62. A cavity is defined in the housing 10, and the air inlet 11 is provided on the housing 10. A radial size of the air inlet 11 is not less than 1 mm, or a cross-sectional area of the air inlet 11 is not less than 0.80 mm². A specific shape and a specific size of the air inlet 11 may be specifically limited according to an actual requirement. Details are not described in the present disclosure again.

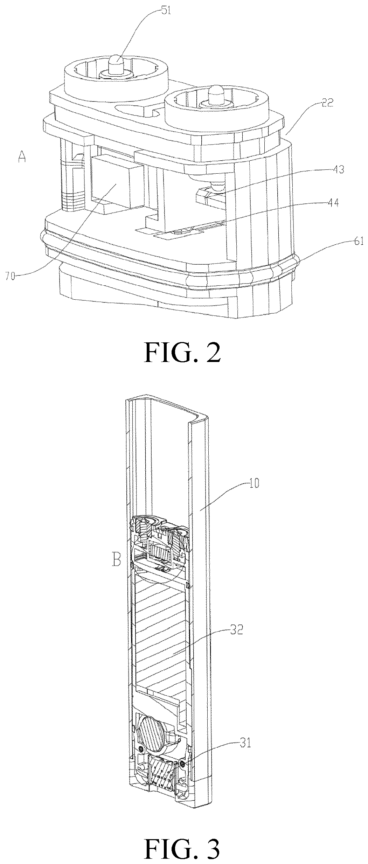

As shown in FIG. 2, the support 20 is arranged in the housing 10. The first mounting portion 25 and the second mounting portion 26 are arranged on the support 20. The first mounting portion 25 and the second mounting portion 26 may be spaced in a length direction of the support 20. The circuit structure 40 extending from the first mounting portion 25 to the second mounting portion 26 is further arranged on the support 20. Electronic devices on the support 20 are electrically connected through the circuit structure 40. The main board assembly 31 and the power supply 32 are arranged on the support 20 through the second mounting portion 26. The power supply 32 is configured to supply power to the vaporizer of the aerosol-generation apparatus. The power supply 32 on the support 20 may be further fixed through a fixing tape 92, to improve stability of the entire structure of the power supply assembly 100. The main board assembly 31 is fixed on the support 20 through a cover housing 93. The cover housing 93 and the support 20 may be assembled through screws or buckles.

A device required for a control circuit is mounted on the main board assembly 31. The power supply 32 is connected to an input circuit on the main board assembly 31 for power supply. The main board assembly 31 is electrically connected to the circuit structure 40 and the power supply 32 respectively. The main board assembly 31, the power supply 32, and the second mounting portion 26 may match the housing 10 to define a battery end space 13.

As shown in FIG. 1 to FIG. 3, the electrode terminal 51 is arranged on the first mounting portion 25, and the electrode terminal 51 is electrically connected to the circuit structure 40 located in the first mounting portion 25. A position of the air inlet 11 corresponds to a position of the first mounting portion 25. The first sealing member 61 is mounted on the support 20, and the first sealing member 61 is located between the first mounting portion 25 and the second mounting portion 26. The first sealing member 61 abuts against the inner wall surface of the housing 10, and the first mounting portion 25 and the second mounting portion 26 are separated through the first sealing member 61. The second sealing member 62 is arranged on the end of the first mounting portion 25 away from the first sealing member 61 (an upper end of the support 20). The second sealing member 62 abuts against the inner wall surface of the housing 10. The first sealing member 61 and the second sealing member 62 defines the air-inlet region 12 in communication with the air inlet 11 in the housing 10.

In the related art, the electrode terminal 51 generally passes through a through hole on a sealing member and extends into the battery end space 13. A protective cover is arranged on the sealing member, and the protective cover is provided with the through hole for the electrode terminal 51 to pass through. In the related art, the electrode terminal 51 is in interference fit with the through hole on the sealing member, and a gap is easily formed between the electrode terminal 51 and the sealing member during assembly or use, causing hazardous gas generated by a battery to enter the air-inlet region 12 through the gap and to be inhaled by a user.

In addition, when a battery abnormally operates, the battery generates hazardous gas with relatively large pressure in a short time, and pressure in a space in which the battery is located rises, to drive the electrode terminal 51 to move, resulting in deformation of the sealing member after gas impact and compression. In addition, it cannot be ensured that the gap between the electrode terminal and the sealing member is filled in a relatively short time, and the hazardous gas generated by the battery enters the gap and is inhaled by the user.

In the present disclosure, referring to FIG. 1 and FIG. 2, the first sealing member 61 is arranged between the first mounting portion 25 and the second mounting portion 26, and the first sealing member 61 matches the housing 10 to separate the air-inlet region 12 and the battery end space 13 that are spaced apart from each other. The electrode terminal 51 is electrically connected to the circuit structure 40 located in the first mounting portion 25 without extending into the battery end space 13, to completely separate the battery end space 13 and the air-inlet region 12. When the battery abnormally operates, the generated hazardous gas is limited in the battery end space 13 and cannot enter the air-inlet region 12, to effectively improve product safety.

Therefore, in the power supply assembly 100 of an aerosol-generation apparatus according to the embodiments of the present disclosure, the first mounting portion 25, the second mounting portion 26, and the circuit structure 40 extending from the first mounting portion 25 to the second mounting portion 26 are arranged on the support 20, an air flow between the first mounting portion 25 and the second mounting portion 26 is separated through the first sealing member 61, and the electrode terminal 51 on the first mounting portion 25 may be electrically connected to the power supply located on the second mounting portion 26 through the circuit structure 40 without being connected to the battery end space 13 in which the second mounting portion 26 is located, to ensure that the battery end space 13 is completely separated from the air-inlet region 12, thereby effectively preventing hazardous gas generated by a battery from entering the air-inlet region 12 and improving product safety.

According to an embodiment of the present disclosure, a first sealing groove 21 extending along a circumferential direction of the support 20 is provided between the first mounting portion 25 and the second mounting portion 26. The first sealing member 61 is arranged in the first sealing groove 21. The first sealing member 61 is an annular sealing ring, and the first sealing member 61 is sleeved on the support 20 or the first sealing member 61 and the support 20 are integrally formed.

That is, referring to FIG. 1 and FIG. 2, the first sealing groove 21 extending along the circumferential direction of the support is provided on an outer peripheral edge of the support 20. The first sealing groove 21 is located between the first mounting portion 25 and the second mounting portion 26. The first sealing member 61 is arranged in the first sealing groove 21. The first sealing member 61 abuts against the inner wall surface of the housing 10, and the first sealing member 61 matches the housing 10 to separate a cavity to obtain the air-inlet region 12 and the battery end space 13.

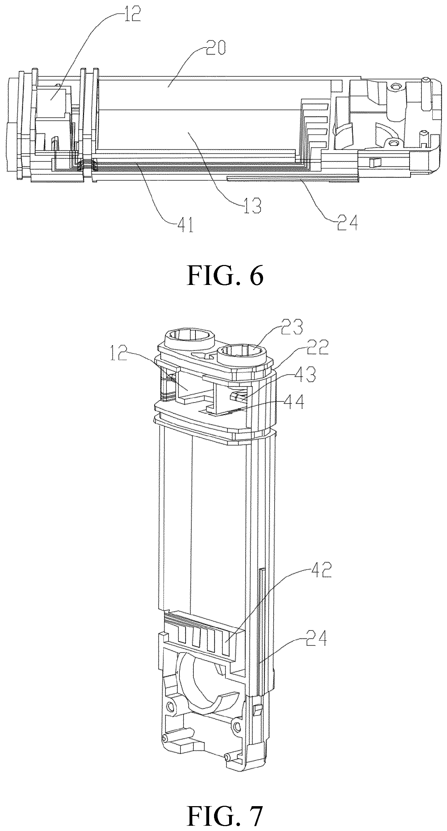

As shown in FIG. 7, the first sealing member 61 and the second sealing member 62 enclose to form the air-inlet region 12. In addition, the first sealing member 61 separates the air-inlet region 12 and the battery end space 13, to prevent the hazardous gas generated by the battery from entering the air-inlet region 12 through the battery end space 13, thereby improving product safety.

Optionally, the first sealing member 61 may be an annular sealing ring, the first sealing groove 21 is annular groove extending along the outer peripheral edge of the support 20, and the first sealing member 61 may be sleeved in the annular groove. Certainly, the first sealing member 61 and the support 20 may alternatively be integrally formed, to ensure stability of a connection between the first sealing member 61 and the support 20.

In some specific implementations of the present disclosure, a mounting hole 23 is provided on the end of the first mounting portion 25 away from the first sealing member 61. The electrode terminal 51 is inserted and fixed to the mounting hole 23. An end of the electrode terminal 51 is electrically connected to the circuit structure 40, and an other end of the electrode terminal 51 is electrically connected to the vaporizer of the aerosol-generation apparatus.

In other words, as shown in FIG. 1 to FIG. 5, an upper end of the support 20 is the end away from the first sealing member 61. The mounting hole 23 is provided on the upper end of the support 20, and the electrode terminal 51 may be inserted into the mounting hole 23. An end of the electrode terminal 51 extends out of the upper end of the support 20, to ensure that the end of the electrode terminal 51 is higher than the top of the support 20, thereby facilitating an electrical connection with the vaporizer. An other end of the electrode terminal 51 extends into the air-inlet region 12 and is electrically connected to the circuit structure 40 in the air-inlet region 12, to ensure that a current loop is formed between the electrode terminal 51 and the power supply 32 and the main board assembly 31.

Optionally, an annular fixing block 52 is arranged in the mounting hole 23, and the fixing block 52 may be made of a magnetic material. The electrode terminal 51 may run through the fixing block 52 and is interference fit with the mounting hole 23 on the support 20 through the fixing block 52. The electrode terminal 51 may be further fixedly connected to the support 20 by arranging the fixing block 52, to ensure stability of a connection between the electrode terminal 51 and the support 20.

According to an embodiment of the present disclosure, a second sealing groove 22 extending along the circumferential direction of the support 20 is provided on a periphery of the end of the first mounting portion 25 away from the first sealing member 61, and the second sealing member 62 is arranged in the second sealing groove 22. The second sealing member 62 is of a cover structure, and the second sealing member 62 covers the end of the first mounting portion 25 away from the first sealing member 61. An avoidance hole 621 is provided on the second sealing member 62, and the electrode terminal 51 passes through the avoidance hole 621.

That is, referring to FIG. 1, FIG. 2, FIG. 7, and FIG. 8, the second sealing groove 22 extending along the outer peripheral edge of the support 20 is provided at a position on the support 20 close to the upper end, and the second sealing member 62 is arranged in the second sealing groove 22. The second sealing member 62 is arranged in the cover structure, and the second sealing member 62 covers the upper end of the support 20. The second sealing member 62 may isolate the air-inlet region 12 from external air. The avoidance hole 621 is provided on the second sealing member 62, and the avoidance hole 621 corresponds to the mounting hole 23. The electrode terminal 51 may extend out of the second sealing member 62 through the avoidance hole 621 and is electrically connected to the vaporizer of the aerosol-generation apparatus. Optionally, the second sealing member 62 and the upper end of the support 20 may be integrally formed, to improve stability of a connection between the second sealing member 62 and the support 20.

In the present disclosure, referring to FIG. 1, the power supply assembly 100 of an aerosol-generation apparatus is further provided with a lower cover 91. The lower cover 91 is arranged on the bottom of the support 20 (an end of the support 20 away from the air-inlet region 12), and the lower cover 91 may be assembled on the bottom of the support 20 through buckles or screws.

In some specific implementations of the present disclosure, the circuit structure 40 is a printing circuit covering an outer surface of the support 20. The printing circuit may be an electrical circuit formed by using an LAP technology. The printing circuit in the support 20 extends from the first mounting portion 25 to the second mounting portion 26. The LAP (laser activating plating) technology may be that a line is engraved on a plastic member through a laser, the line is activated by using a chemical agent, and then a conductive metal is plated on the line. The printing circuit formed by using the LAP technology can obtain a better effect by using a common material without a special modified material. In the present disclosure, a circuit is printed by using the LAP, and a circuit arrangement manner in which a cable structure is used in the related art is eliminated, so that a space in the power supply assembly 100 of an aerosol-generation apparatus is more compact with a higher utilization rate. Certainly, in the present disclosure, the circuit structure 40 may also be obtained in a manner of spraying conductive paste onto a surface of the support 20.

According to an embodiment of the present disclosure, the power supply assembly 100 of an aerosol-generation apparatus further includes an airflow sensor 70. The airflow sensor 70 is arranged on the first mounting portion 25. The airflow sensor 70 is electrically connected to the circuit structure 40. A position of the airflow sensor 70 corresponds to a position of the air inlet 11. The power supply assembly 100 of an aerosol-generation apparatus further includes an electrical connection member 80. The electrical connection member 80 is arranged between the airflow sensor 70 and the circuit structure 40. A first end of the electrical connection member 80 is electrically connected to an electrode of the airflow sensor 70. A second end of the electrical connection member 80 abuts against the circuit structure 40.

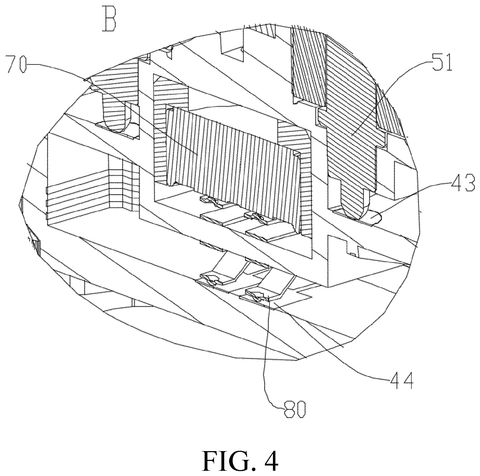

In other words, as shown in FIG. 1, the power supply assembly 100 of an aerosol-generation apparatus is further provided with the airflow sensor 70. The airflow sensor 70 is mounted on an end of the support 20 provided with the mounting hole 23 through the first mounting portion 25. The airflow sensor 70 is electrically connected to the circuit structure 40, and the position of the airflow sensor 70 corresponds to the position of the air inlet 11. The airflow sensor 70 may be configured to sense an airflow change in the air-inlet region 12, to control the power supply assembly 100 of an aerosol-generation apparatus to supply power to the vaporizer. The power supply assembly 100 of an aerosol-generation apparatus is further provided with the electrical connection member 80. As shown in FIG. 4, the electrical connection member 80 is arranged below the airflow sensor 70, and the electrical connection member 80 is located between the airflow sensor 70 and the circuit structure 40. The first end of the electrical connection member 80 is electrically connected to the electrode of the airflow sensor 70, and the second end of the electrical connection member 80 abuts against the circuit structure 40.

In the present disclosure, referring to FIG. 4, FIG. 6, and FIG. 7, the circuit structure 40 includes a start point 42, a first end point 43, and a second end point 44. The start point 42 of the circuit structure 40 is connected to an output end of the main board assembly 31 and is respectively connected to the first end point 43 and the second end point 44 through a current path 41 on a peripheral side of the support 20 (as shown in FIG. 6 and FIG. 7). The first end point 43 is provided with at least one connection point, the second end point 44 is also provided with at least one connection point, and the airflow sensor 70 and the electrode terminal 51 is finally connected, to generate or collect an electric signal in the circuit structure 40. Specifically, an end contact of the electrode terminal 51 located in the air-inlet region 12 abuts against one connection point on the first end point 43 of the circuit structure 40. The second end of the electrical connection member 80 abuts against one connection point on the second end point 44 of the circuit structure 40 and is in communication with the main board assembly 31 and the power supply 32 through the circuit structure 40. The circuit structure 40 abuts against an electronic element in the power supply assembly 100 of an aerosol-generation apparatus, to achieve a more reliable connection, and a problem of poor connection caused by broken cables or welding points does not occur.

In the present disclosure, the airflow sensor 70 is mounted above the support 20. During inhalation by a user, an air flow enters through the air inlet 11 and flows through the airflow sensor 70, to generate an electric signal. The electric signal enters the second end point 44 of the circuit structure 40 in the support 20 through the electrical connection member 80 and is transmitted to the main board assembly 31 through the current path 41. After the signal is processed, a current is generated and conducted to the current path 41, then reaches the first end point 43 and is conducted to the electrode terminal 51, and finally the current is conducted to the vaporizer, to achieve a heating function and generate aerosol.

Multiple circuit structures 40 made by using the LAP technology are arranged on the support 20. Start points 42 are located below the battery end space 13 and are connected to the output end of the main board assembly 31. The current path 41 is arranged on an outer side surface of the support 20 and is in communication with the start point 42, the first end point 43, and the second end point 44. The first end point 43 abuts against an end of the electrode terminal 51, and the second end point 44 abuts against the electrical connection member 80, to complete power supply and connection to a heating circuit and a start circuit. The electrode terminal 51 needs to abut against only the first end point 43 to implement a connection with the circuit, and the mounting hole 23 on the support 20 does not need to be in communication with a side of the battery end space 13. The battery end space 13 and the air-inlet space are completely separated and sealed in terms of the structure, to effectively prevent the hazardous gas generated by the power supply 32 from entering the air-inlet space and being inhaled by the user, thereby improving product safety.

In some specific implementations of the present disclosure, limiting convex strips 24 extending along a length direction of one of the support and the housing are arranged on two sides of one of the support 20 and the housing 10, limiting grooves corresponding to positions of the limiting convex strips 24 are provided on two sides of the other of the support 20 and the housing 10, and the limiting convex strips 24 are inserted into the limiting grooves.

That is, as shown in FIG. 6 to FIG. 8, the limiting convex strips 24 extending along the length direction of one of the support and the housing are arranged on the two sides of one of the support 20 and the housing 10. The limiting grooves are provided on the two sides of the other of the support 20 and the housing 10. The limiting grooves correspond to the positions of the limiting convex strips 24. The limiting convex strips 24 are inserted into the limiting grooves, to implement assembly between the support 20 and the housing 10.

Optionally, the limiting convex strips 24 are arranged on two sides of the support 20. The limiting grooves are provided on two sides of the housing 10. Through matching between the limiting convex strips 24 and the limiting grooves, the assembly between the housing 10 and the support 20 can be implemented, and positioning and rotation resistance functions can be achieved.

When the battery is abnormal, pressure inside the housing rapidly rises, and air flow pressure in the battery end space 13 rapidly rises, to drive the support 20 to move toward a side of the air-inlet region 12. In the present disclosure, the housing 10 and the support 20 are assembled by using the limiting convex strips 24 and the limiting grooves. Due to a limiting effect of the convex strip, the support 20 can be effectively prevented, to ensure the safety of the user.

In conclusion, in the power supply assembly 100 of an aerosol-generation apparatus according to the embodiments of the present disclosure, the first mounting portion 25, the second mounting portion 26, and the circuit structure 40 extending from the first mounting portion 25 to the second mounting portion 26 are arranged on the support 20, the first mounting portion 25 and the second mounting portion 26 are separated through the first sealing member 61, the second sealing member 62 is arranged on the end of the first mounting portion 25 away from the first sealing member 61, and the first sealing member 61 and the second sealing member 62 define the air-inlet region 12 in communication with the air inlet 11. In addition, the electrode terminal 51 on the support 20 is electrically connected to the circuit structure 40 located on the first mounting portion 25 without being connected to the battery end space 13 in which the second mounting portion 26 is located, to ensure that the battery end space 13 is completely separated from the air-inlet region 12, thereby effectively preventing hazardous gas generated by a battery from entering the air-inlet region 12 and improving product safety. In addition, in the present disclosure, by using the circuit structure 40 formed by using the LAP technology, a circuit arrangement manner in which a cable structure is used in the related art is eliminated, so that a space in the power supply assembly 100 of an aerosol-generation apparatus is more compact with a higher utilization rate, and a connection is more stable.

According to a second aspect of the present disclosure, an e-cigarette is provided, which includes the power supply assembly 100 of an aerosol-generation apparatus according to any embodiment and the vaporizer. The vaporizer is connected to the power supply assembly 100. Because the power supply assembly 100 of an aerosol-generation apparatus according to the present disclosure has the technical effect, the e-cigarette according to the present disclosure should also have the same technical effect. That is, in the present disclosure, by using the power supply assembly 100 of an aerosol-generation apparatus, the e-cigarette has a more compact space, a higher utilization rate, a more stable circuit connection, which can effectively prevent the hazardous gas generated by the battery from entering the air-inlet region 12, thereby improving product safety.

Other configurations and operations of the e-cigarette according to the embodiments of the present disclosure are known to those of ordinary skill in the art and will not be described in detail herein.

Although some specific embodiments of the present disclosure have been described in detail by way of examples, a person skilled in the art should understand that the foregoing examples are only for description and are not intended to limit the scope of the present disclosure. A person skilled in the art should appreciate that modifications may be made to the foregoing embodiments without departing from the scope and spirit of the present disclosure. The scope of the present disclosure is limited only by the appended claims.

## Claims

1. A power supply assembly of an aerosol-generation apparatus, configured to supply power to a vaporizer of an aerosol-generation apparatus, and the power supply assembly comprising:
a housing, an air inlet being provided on the housing;
a support, the support being arranged in the housing, the support comprising a first mounting portion and a second mounting portion, and a circuit structure extending from the first mounting portion to the second mounting portion being arranged on the support;
a main board assembly and a power supply, the main board assembly and the power supply being arranged on the second mounting portion, and the main board assembly being electrically connected to the circuit structure and the power supply respectively;
an electrode terminal, the electrode terminal being arranged on the first mounting portion, and the electrode terminal being electrically connected to the circuit structure and the vaporizer of the aerosol-generation apparatus respectively;
a first sealing member, the first sealing member being arranged on the support and being located between the first mounting portion and the second mounting portion, and the first sealing member abutting against an inner wall surface of the housing to separate the first mounting portion and the second mounting portion in the housing; and
a second sealing member, the second sealing member being arranged on an end of the first mounting portion away from the first sealing member, the second sealing member abutting against the inner wall surface of the housing, the first sealing member and the second sealing member defining an air-inlet region in the housing, and the air inlet being in communication with the air-inlet region.

2. The power supply assembly of the aerosol-generation apparatus according to claim 1, wherein a first sealing groove extending along a circumferential direction of the support is provided between the first mounting portion and the second mounting portion, and the first sealing member is arranged in the first sealing groove.

3. The power supply assembly of the aerosol-generation apparatus according to claim 2, wherein the first sealing member is an annular sealing ring, and the first sealing member is sleeved on the support or the first sealing member and the support are integrally formed.

4. The power supply assembly of the aerosol-generation apparatus according to any one of claims 1 to 3, wherein a mounting hole is provided on the end of the first mounting portion away from the first sealing member, the electrode terminal is inserted and fixed to the mounting hole, an end of the electrode terminal is electrically connected to the circuit structure, and an other end of the electrode terminal is electrically connected to the vaporizer of the aerosol-generation apparatus.

5. The power supply assembly of the aerosol-generation apparatus according to any one of claims 1 to 4, wherein a second sealing groove extending along the circumferential direction of the support is provided on a periphery of the end of the first mounting portion away from the first sealing member, and the second sealing member is arranged in the second sealing groove.

6. The power supply assembly of the aerosol-generation apparatus according to any one of claims 1 to 5, wherein the second sealing member is of a cover structure, and the second sealing member covers the end of the first mounting portion away from the first sealing member.

7. The power supply assembly of the aerosol-generation apparatus according to claim 6, wherein an avoidance hole is provided on the second sealing member, and the electrode terminal passes through the avoidance hole and is electrically connected to the vaporizer of the aerosol-generation apparatus.

8. The power supply assembly of the aerosol-generation apparatus according to any one of claims 1 to 7, wherein the circuit structure is a printing circuit covering an outer surface of the support.

9. The power supply assembly of the aerosol-generation apparatus according to any one of claims 1 to 8, further comprising an airflow sensor, wherein the airflow sensor is arranged on the first mounting portion, the airflow sensor is electrically connected to the circuit structure, and a position of the airflow sensor corresponds to a position of an air inlet.

10. The power supply assembly of the aerosol-generation apparatus according to claim 9, further comprising an electrical connection member, wherein the electrical connection member is arranged between the airflow sensor and the circuit structure, a first end of the electrical connection member is electrically connected to an electrode of the airflow sensor, and a second end of the electrical connection member abuts against the circuit structure.

11. The power supply assembly of the aerosol-generation apparatus according to any one of claims 1 to 10, wherein limiting convex strips extending along a length direction of one of the support and the housing are arranged on two sides of one of the support and the housing, limiting grooves corresponding to positions of the limiting convex strips are provided on two sides of the other of the support and the housing, and the limiting convex strips are inserted into the limiting grooves.

12. An e-cigarette, comprising:
the power supply assembly of an aerosol-generation apparatus according to any one of claims 1 to 11; and
the vaporizer, the vaporizer being connected to the power supply assembly.
